# FASCICULE DE BREVET EUROPEEN

(11) **EP 1 774 614 B1**
(45) Date de publication et mention de la délivrance du brevet: **26.11.2008**
(21) Numéro de dépôt: 05791016.8
(22) Date de dépôt: 13.07.2005
(51) Int. Cl.: H01M 10/40, H01M 6/18, C08J 5/22

(54) **PROCEDE DE PREPARATION D'UN MATERIAU POLYMERE ORGANIQUE CONDUCTEUR ANIONIQUE, POUR SYSTEME ELECTROCHMIQUE**
VERFAHREN ZUR HERSTELLUNG EINES ANIONENLEITFÄHIGEN ORGANISCHEN POLYMERMATERIALS FÜR EIN ELEKTROCHEMISCHES SYSTEM
METHOD FOR PREPARING AN ANIONIC CONDUCTIVE ORGANIC POLYMER MATERIAL FOR AN ELECTROCHEMICAL SYSTEM

(30) Priorité: 16.07.2004 FR 0407912
(43) Date de publication de la demande: 18.04.2007
(73) Titulaire: Electricité de France, 75008 Paris (FR)
(72) Inventeur: AKROUR, Laurent, F-91600 Savigny Sur Orge (FR); GAUTIER, Ludmila, 76437 Rastatt (DE); BOUET, Jacques, F-75015 Paris (FR); FAUVARQUE, Jean-François, F-75006 Paris (FR)
(74) Mandataire: Ahner, Francis
(86) Numéro de dépôt international: PCT/FR2005/001812
(87) Numéro de publication internationale: WO 2006/016068

(56) Documents cités:
- EP-A- 0 161 623

## Description

La présente invention concerne un procédé de préparation d'un matériau polymère organique conducteur anionique, pour système électrochimique. L'invention a également pour objet un matériau polymère organique conducteur anionique, sous forme de solution ou sous forme solide, pour système électrochimique, susceptible d'être obtenu par la mise en oeuvre dudit procédé. L'invention concerne également des membranes échangeuses d'anions contenant ledit matériau organique polymère conducteur anionique. L'invention a également pour objet l'utilisation desdites membranes et/ou dudit matériau, notamment dans des systèmes électrochimiques, tels que les piles à combustible.

Les systèmes électrochimiques tels que les piles à combustibles ont connu ces dernières années un intérêt grandissant, quel que soit leur domaine d'application. Les piles à combustibles sont des générateurs électrochimiques d'énergie qui convertissent de l'énergie chimique en énergie électrique. Divers types de piles à combustibles peuvent être cités, tels que SOFC (Solid Oxide Fuel Cell), PEMFC (Proton Exchange Membrane Fuel Cell), MCFC (Molten Carbonate Fuel Cell), PAFC (Phosphoric Acid Fuel Cell), ou encore les piles à combustibles alcalines.

Les piles à combustibles alcalines sont particulièrement avantageuses par rapport aux autres systèmes du fait que les cinétiques de réactions aux électrodes sont plus élevées en milieu basique qu'en milieu acide, et que ce milieu est moins agressif Elles ne nécessitent donc pas l'emploi de catalyseurs précieux et onéreux, et permettent l'utilisation de plaques bipolaires métalliques en nickel.

Le coeur des piles à combustible se compose d'une anode, d'une cathode et d'un électrolyte. L'électrolyte peut être liquide ou solide, et les espèces conductrices peuvent être des anions ou des cations, par exemple H⁺, OH⁻, CO₃²⁻, et O²⁻. Les électrolytes solides sont préférés dans les piles à combustible, car les systèmes électrochimiques sont alors de mise en oeuvre plus aisée et de durée de vie bien supérieure aux piles à combustible comprenant des électrolytes liquides (problème de fuite de liquide).

Afin de pallier les problèmes générés par les électrolytes anioniques liquides, il existait ainsi un besoin de développer de nouveaux électrolytes solides anioniques susceptibles d'être utilisés dans les piles à combustible, notamment les piles à combustible alcalines.

Différentes membranes à conduction ionique, pouvant être utilisées comme électrolytes solides anioniques, ont déjà été décrites dans l'art antérieur. Ainsi, le brevet EP 658 278 décrit des électrolytes solides polymères alcalins aqueux comprenant une matrice de polymère organique du type polyoxyde d'éthylène, et un composé basique du type KOH. Les électrolytes solides polymères alcalins de ce document peuvent être utilisés dans des accumulateurs alcalins, tels que les accumulateurs nickel-zinc. De tels électrolytes sont cependant fortement cristallins, et donc très fragiles. Ils présentent également un nombre de transport en ions OH⁻ de 0,76, limitant ainsi leur sélectivité et leur conductivité ionique.

Diverses membranes à conduction anionique ont déjà été commercialisées pour des applications de type électrodialyse, mais ces membranes ne sont généralement pas utilisables au-delà de 50°C.

Les membranes échangeuses anioniques développées jusqu'alors ont souvent été réalisées par synthèse de copolymère du styrène et d'un autre monomère tel que le divinyl-benzène ou l'éihyl-vinyl-benzène, et par ajout d'un monomère inerte afin d'obtenir des membranes ayant des propriétés de souplesse qui soient compatibles avec leur manipulation et leur mise en oeuvre ultérieure. Un tel procédé de fabrication nécessite cependant de prévoir l'addition de plastifiant lors de la réalisation du film, afin de pouvoir effectuer une fonctionnalisation correcte de ce film lors de l'étape correspondante. La fabrication du film et sa fonctionnalisation sont donc effectuées en deux étapes séparées, ce qui peut compliquer singulièrement le procédé de fabrication de la membrane par le nombre d'étapes à prévoir lors de la mise en oeuvre d'une fabrication industrielle.

D'autres membranes à fonction chlorure active à base de polystyrène ont été préparées et fonctionnalisées en une seule étape, suivie par une étape de réticulation. Typiquement, on effectue une chlorométhylation du polystyrène par action du chlorométhyl-méthyl-éther, qui est un produit très toxique, sur ce polymère.

Dans les deux types de membranes décrites ci-dessus, l'utilisation d'un monomère possédant un cycle aromatique se révèle être un inconvénient majeur lors d'applications telles que l'électrolyse ou l'électrodialyse, qui conduisent à l'apport de polluants extérieurs. Certains de ces polluants se trouvent en effet piégés par les noyaux aromatiques présents dans le styrène ou le polystyrène, dégradant de façon irrémédiable les propriétés desdites membranes.

D'autres membranes ont également déjà été préparées par réticulation de polyéthylène-imine avec des oligomères d'épichlorhydrine, mais les membranes obtenues sont alors faiblement basiques et inadaptées à une utilisation en milieu neutre.

D'autres membranes ont été synthétisées par emploi d'un polymère comportant des groupes latéraux à fonction chlorure active, d'amines tertiaires et d'un polymère inactif (US 5,746,917). Le procédé de fabrication de telles membranes s'avère particulièrement complexe, puisqu'il nécessite la protection sélective des groupes amine tertiaire, par exemple par formation d'hydrochlorure, avant de fonctionnaliser le polymère avec lesdites amines tertiaires, et qu'après fonctionnalisation il est ensuite nécessaire d'enlever ladite protection sur les groupements amine tertiaire.

Il existait ainsi un besoin de mettre au point de nouveaux électrolytes polymères solides anioniques, susceptibles d'être utilisés dans divers systèmes électrochimiques tels que les piles à combustible, notamment les piles à combustible alcalines, et ne présentant pas les inconvénients de l'art antérieur.

La présente invention vient combler ce besoin. La Demanderesse a ainsi découvert un nouveau matériau polymère organique conducteur anionique, portant des groupes ammonium quaternaire, susceptible d'être utilisé dans des systèmes électrochimiques, tels que les piles à combustible, notamment comme électrolyte polymère solide anionique.

La Demanderesse a également découvert qu'un tel matériau polymère organique conducteur anionique pouvait être obtenu par un procédé très simple comprenant une quaternisation impliquant une association d'au moins une amine bifonctionnelle et d'au moins une amine monofonctionnelle tertiaire ou secondaire avec au moins un polymère organique contenant des groupes fonctionnels halogénés réactifs, et qu'un tel matériau présentait divers avantages par rapport aux matériaux conducteurs anioniques de l'art antérieur.

Le brevet EP 0 161 623 A, considéré comme représentant l'état de la technique le plus pertinent, décrit un copolymère bloc réticulé portant les groupes ammonium quaternaire obtenu par la quaternisation ou l'amination des dits copolymère contenant des groupes fonctionnels halogénés réactifs par une amine monofonctionnelle tertiaire. Le polymère est utilisé comme séparateur dans des batteries.

Le matériau polymère organique conducteur anionique selon la présente invention présente ainsi de très bonnes performances électrochimiques, une sélectivité vis-à-vis du transport des anions bien supérieure aux matériaux de l'art antérieur, et il peut être recyclé très facilement, du fait de sa composition essentiellement carbonée qui n'engendre pas de problèmes environnementaux. De plus, le matériau selon la présente invention présente une bonne conductivité ionique à température ambiante, couplée à une bonne stabilité thermique et chimique, et il peut être utilisé pour de nombreuses applications dans le domaine électrochimique. Le matériau polymère organique conducteur anionique selon la présente invention peut ainsi être utilisé pour réaliser des membranes échangeuses anioniques, pour réaliser des assemblages électrodes-membranes ou électrodes-membranes-électrodes dans des systèmes électrochimiques, il peut être utilisé comme colle anionique dans des systèmes électrochimiques pour améliorer l'interface électrode-membrane, ou encore comme additif pour la fabrication de couches actives d'électrodes.

En outre, le matériau selon la présente invention, ainsi que les membranes selon la présente invention pouvant être fabriquées à l'aide d'un tel matériau, peuvent présenter une très bonne tenue et avoir ainsi une rigidité suffisante, tout en ayant par ailleurs de très bonnes propriétés d'adhésion. Les propriétés adhésives et les propriétés de réticulation ou de rigidité du matériau et des membranes comprenant un tel matériau peuvent être contrôlées et modulées par le procédé selon la présente invention, en jouant sur les proportions des constituants de départ et/ou par ajout contrôlé d'agent de réticulation.

Le procédé selon la présente invention peut ainsi conduire à un matériau possédant un taux de réticulation important, caractérisé par des propriétés de rigidité et de souplesse telles que le matériau ou la membrane fabriquée à partir d'un tel matériau est facilement manipulable et ne se déchire pas facilement, et possédant simultanément des propriétés d'adhésion telles que le matériau ou la membrane échangeuse anionique présente des propriétés interfaciales améliorées, permettant de diminuer la résistance ohmique du système. Le procédé selon la présente invention peut aussi conduire à un matériau quasiment non réticulé, présentant des propriétés d'adhésion telles que le matériau peut être utilisé comme une couche interfaciale entre des membranes échangeuses anioniques et des électrodes dans des systèmes électrochimiques, permettant de diminuer la résistance ohmique du système.

Le procédé suivant la présente invention peut aussi conduire à un matériau non réticulé, ou quasiment non réticulé, qui peut être utilisé sous forme de solution comme additif dans la couche active d'électrodes dans des systèmes électrochimiques, avant d'être réticulé à chaud. Le procédé suivant la présente invention peut conduire également à un matériau présentant une stabilité chimique en milieu basique supérieure aux membranes de l'art antérieur développées jusqu'à présent, ne subissant pas la dégradation d'Hoffmann et/ou ne favorisant pas la destruction du groupement ammonium quaternaire en structure pipérazine, en particulier en raison de l'utilisation d'une association d'amines et de la présence en particulier d'amines monofonctionnelles.

La présente invention a ainsi pour objet un procédé de préparation d'un matériau polymère organique conducteur anionique, pour système électrochimique, par une réaction de substitution nucléophile de :
A) au moins un polymère organique contenant des groupes fonctionnels halogénés réactifs avec
B) au moins une amine bifonctionnelle tertiaire et
C) au moins une amine monofonctionnelle tertiaire ou secondaire,
lesdits composés A), B) et C) étant en solution dans au moins un solvant organique polaire,
avantageusement à une température comprise entre 20°C et 150°C, pour conduire à la formation d'un matériau polymère organique conducteur anionique, porteur de groupes ammonium quaternaire, sous forme de solution,
lesdites amines monofonctionnelles ou bifonctionnelles étant choisies de sorte à ce que les ammoniums quaternaires formés soient peu ou pas sensibles à la β-élimination de protons, lesdites amines monofonctionnelles ou bifonctionnelles étant avantageusement choisies dans le groupe constitué par les amines ne possédant pas d'atome d'hydrogène en β de l'azote; les amines dont les atomes d'hydrogène en β de l'azote ont un caractère peu acide, telles que les amines aromatiques, les amines dont les atomes d'hydrogène en β de l'azote sont stériquement encombrés, en particulier les amines cyclisées, les amines possédant au moins un atome de carbone en β de l'azote porteur d'au moins un groupe donneur inductif tel que le groupe OH ou N; et leurs mélanges.

Par le terme de "système électrochimique", on entend au sens de la présente invention tout système comprenant une membrane et des électrodes, pour lequel un champ électrique est appliqué entre une anode et une cathode et qui génère un mouvement d'anions et de cations, et dont la membrane joue un rôle de filtre. A titre de système électrochimique, on peut citer par exemple les générateurs tels que les piles à combustibles, les générateurs métal-air du type zinc-air et les générateurs borohydrure-air, les électrodes telles que les électrodes à gaz ou à air, les systèmes contenant de telles électrodes, les capteurs, les électrodialyseurs, les électrolyseurs, les dispositifs électrochromes, ou encore les dispositifs d'électrolyse électromembranaire dans lesquels on interpose entre les électrodes un séparateur ionique.

Par le terme d'"amine monofonctionnelle", on entend au sens de la présente invention toute amine ne comprenant qu'une seule fonction azotée.

Par le terme d'"amine bifonctionnelle", on entend au sens de la présente invention toute amine comprenant deux fonctions azotées.

Avantageusement selon la présente invention, les composés A), B) et C) sont préalablement dissous ou mis en suspension dans au moins un solvant organique polaire, avant d'être mélangés pour subir la réaction de substitution nucléophile. Un seul solvant peut être utilisé pour mettre en solution les composés A), B) et C), ou plusieurs solvants peuvent être utilisés pour mettre en solution lesdits composés, les solvants utilisés alors étant des solvants organiques miscibles entre eux. Les solvants organiques pouvant être utilisés dans le procédé selon la présente invention pour mettre en solution le polymère organique, l'amine bifonctionnelle et/ou l'amine monofonctionnelle sont des solvants tels que le DMF, ou le DMSO.

Avantageusement selon la présente invention, les amines monofonctionnelles et bifonctionnelles sont choisies de sorte à ce que les ammoniums quaternaire obtenus à partir des amines soient stables à la réaction d'Hoffmann, afin d'augmenter la stabilité thermochimique du matériau polymère organique conducteur anionique obtenu. La réaction d'élimination d'Hoffmann se produit essentiellement sur les ammoniums quaternaires, et conduit à la décomposition des hydroxydes d'ammonium quaternaire en alcène et en amine tertiaire selon le schéma suivant :

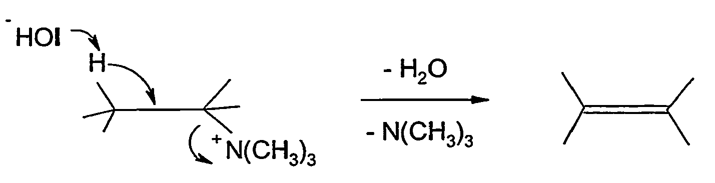

On choisit ainsi avantageusement des amines qui ne sont pas sensibles à la β-élimination de protons, telles que des amines ne possédant pas d'atome d'hydrogène en β de l'azote, ou des amines qui sont peu sensibles à la β-élimination de protons, telles que des amines possédant des atomes d'hydrogène en β de l'azote peu labiles, de préférence les amines dont les atomes d'hydrogène en β de l'azote ont un caractère peu acide, telles que les amines aromatiques, les amines dont les atomes d'hydrogène en β de l'azote sont stériquement encombrés, en particulier les amines cyclisées, de préférence les amines cycliques de configuration figée, ou encore les amines possédant au moins un atome de carbone en β de l'azote porteur d'au moins un groupe donneur inductif tel que le groupe OH ou N, et leurs mélanges. Typiquement, les amines utilisées sont des amines stériquement encombrées qui ne sont pas coplanaires, de configuration figée, afin que l'hydrogène en β de l'azote, les deux atomes de carbone et l'atome d'azote des ammoniums quaternaires obtenus ne puissent pas se placer dans un même plan pour subir une cis- ou trans-β-élimination.

La substitution nucléophile qui s'opère entre le polymère et les amines peut être illustrée par le schéma réactionnel 1 suivant : 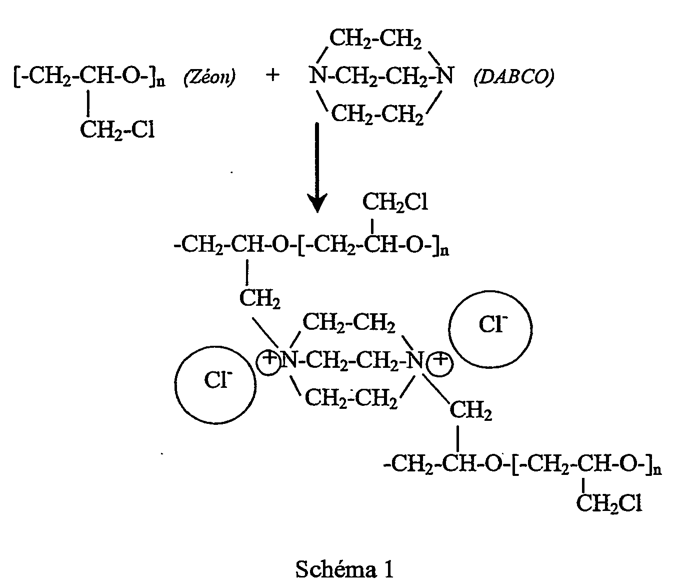 On obtient ainsi avantageusement un polymère portant des groupes ammonium quaternaire. Le produit obtenu possède alors un squelette polymère réticulable, comportant des sites cationiques pendants en lieu et place des fonctions pendantes inactives d'origine. La substitution nucléophile est de préférence suivie par conductimétrie. Le temps de réaction entre le polymère organique et le mélange d'amines est typiquement compris entre 1 heure et 5 jours, de manière avantageuse entre 2 et 5 heures.

Dans un mode de réalisation particulier selon la présente invention, le procédé comprend les étapes suivantes :
a₁) dissolution dans au moins un solvant organique polaire des composés B) et C),
b₁) dissolution du composé A) dans ledit solvant organique polaire ou dans un solvant organique miscible avec ledit solvant organique polaire,
c₁) réaction de substitution nucléophile par mélange des solutions ainsi obtenues, avantageusement à une température comprise entre 20°C et 150°C, encore plus avantageusement entre 60 et 130°C, encore plus avantageusement entre 60 et 100°C, en particulier entre 80 et 100°C, et
d₁) récupération de la solution du matériau polymère organique conducteur anionique.

Dans un autre mode de réalisation particulier selon la présente invention, le procédé comprend les étapes suivantes :
a₂) réaction de substitution nucléophile du composé A) avec le composé C), avantageusement à une température T₁ comprise entre 20°C et 150°C, encore plus avantageusement entre 110 et 130°C, lesdits composés A) et C) ayant été préalablement dissous dans au moins un solvant organique polaire,
b₂) ajout dans le mélange réactionnel du composé B),
c₂) réaction de substitution nucléophile dudit composé B) avec les composés obtenus à l'issue de l'étape a₂), avantageusement à une température T₂ comprise entre 20°C et 150°C, encore plus avantageusement entre 60 et 130°C, encore plus avantageusement entre 60 et 100°C, en particulier entre 80 et 100°C, puis
d₂) récupération de la solution du matériau polymère organique conducteur anionique.

Les températures T₁ et T₂ peuvent être identiques ou différentes. Avantageusement selon la présente invention, les étapes b₂) et c₂) sont réalisées simultanément. Lors de l'étape b₂), le composé B) peut avoir été préalablement dissous dans un solvant organique polaire, un tel solvant pouvant être identique à celui utilisé lors de l'étape a₂) ou pouvant être un solvant miscible avec le solvant utilisé lors de l'étape a₂).

Typiquement, le polymère A) de la présente invention comporte des fonctions pendantes qui comportent elles-mêmes un atome d'halogène, de préférence choisi parmi Cl, Br et I. Avantageusement selon la présente invention, le polymère organique contenant des groupes fonctionnels halogénés réactifs est un homopolymère ou un copolymère à squelette polyéther. De façon encore plus avantageuse selon la présente invention, le polymère organique est un polymère d'épichlorhydrine ou un copolymère à base d'épichlorhydrine et de comonomères tels que l'oxyde d'éthylène. La polyépichlorhydrine et ses copolymères sont en particulier utilisés dans le cadre de la présente invention pour leur squelette polyoxyéthylène favorable à la conductivité ionique et pour leur caractère amorphe.

Typiquement, le polymère selon la présente invention a une masse moléculaire comprise entre 2 000 et 5 000 000, de préférence entre 100 000 et 1 000 000, de manière encore plus préférée de l'ordre de 700 000.

Selon une caractéristique particulière de la présente invention, l'amine monofonctionnelle C) tertiaire ou secondaire est choisie dans le groupe constitué par la diéthanolamine, la triéthanolamine, la quinuclidine, le quinuclidinol, et leurs mélanges. De manière particulièrement avantageuse selon la présente invention, la quinuclidine est utilisée à titre d'amine monofonctionnelle.

Dans un exemple de réalisation particulier de la présente invention, l'amine bifonctionnelle B) est choisie dans le groupe constitué par la tétraméthyléthylène diamine, le 1,4-diazobicyclo-(2,2,2)-octane (DABCO), la N-méthyl imidazoline, la bipyridine, la diimidazoline, et leurs mélanges. De manière particulièrement avantageuse selon la présente invention, le 1,4-diazobicyclo-(2,2,2)-octane (DABCO) est utilisé à titre d'amine bifonctionnelle.

Les associations d'amines monofonctionnelle et bifonctionnelle préférées selon la présente invention sont les suivantes : DABCO et quinuclidine, DABCO et quinuclidinol, ou encore DABCO et diéthanolamine.

Le fait d'utiliser des amines monofonctionnelles en association avec des amines bifonctionnelles est particulièrement avantageux selon la présente invention, car une telle association permet d'influer sur les propriétés du matériau polymère organique conducteur anionique obtenu, telles que la conductivité, l'hydrophilie, la stabilité thermique ou chimique, ou encore l'adhésion.

Le choix d'amines spécifiques permet ainsi de contrôler ces diverses propriétés et d'obtenir ainsi un bon compromis entre conduction ionique/performance électrochimique/adhésion et stabilité/rigidité/réticulation du matériau.

En particulier, l'utilisation d'amines monofonctionnelles permet d'augmenter les capacités d'échange ionique du matériau, par augmentation de la quantité d'ammonium quaternaire accessible, avantageusement en évitant la formation de structure du type pipérazine qui détruit les fonctions ammonium quaternaire, provenant de certaines amines bifonctionnelles, telles que le DABCO, et permet de jouer sur le taux de réticulation. Le choix du type d'amines monofonctionnelles et de leur proportion permet ainsi d'influer sur les performances électrochimiques du matériau obtenu et sur ses propriétés d'adhésion.

L'utilisation d'amines bifonctionnelles permet quant à elle d'influer sur le taux de réticulation du matériau obtenu, par bi-substitution nucléophile sur les fonctions halogénées réactives du polymère, comme présenté sur le schéma 1.

Avantageusement selon la présente invention, les proportions molaires de fonctions amine par rapport aux fonctions halogène sont comprises entre 0,1 et 1, encore plus avantageusement entre 0,1 et 0,5. Le choix d'un tel ratio est déterminé en fonction de la structure du matériau ou de la membrane visée pour l'application envisagée.

Avantageusement selon la présente invention, les proportions molaires de l'amine bifonctionnelle par rapport à l'amine monofonctionnelle sont comprises entre 0,1 et 0,9, encore plus avantageusement entre 0,1 et 0,5. Une proportion élevée d'amine bifonctionnelle, telle qu'une proportion molaire de l'ordre de 0,8 ou 0,9 d'amine bifonctionnelle, par rapport à l'amine monofonctionnelle, permet d'obtenir un matériau avec un taux de réticulation important et une bonne résistance mécanique. Ceci est particulièrement avantageux pour réaliser ensuite des membranes de bonne tenue par exemple. Une proportion élevée d'amine monofonctionnelle, telle qu'une proportion molaire de l'ordre de 0,1 ou 0,2 d'amine bifonctionnelle, par rapport à l'amine monofonctionnelle, permet d'obtenir quant à elle un matériau avec de bonnes propriétés d'adhésion et de conduction ionique. Ceci est particulièrement avantageux pour réaliser ensuite des membranes adhésives pouvant jouer le rôle de colle anionique, performantes électrochimiquement, mais avec de faibles propriétés mécaniques par exemple.

Dans un exemple de réalisation particulier de la présente invention, la réaction de substitution nucléophile de A) avec B) et C) est effectuée à une température comprise entre 25°C et 130 °C, avantageusement entre 25°C et 100 °C, encore plus avantageusement entre 50°C et 100°C, notamment entre 50°C et 80°C.

Selon une caractéristique particulière de la présente invention, le procédé contient en outre une étape d'élimination du solvant pour obtenir un matériau polymère conducteur anionique sous forme solide. Avantageusement selon la présente invention, l'élimination du solvant est réalisée par évaporation de solvant ou par précipitation du matériau par inversion de phase à l'aide d'un solvant non miscible avec ledit solvant. Dans le cas où l'on procède à l'élimination du solvant, il est toujours possible de redissoudre ensuite le matériau sous forme solide dans un autre solvant, du type solvant polaire, tel que l'eau ou des mélanges aqueux, à condition de ne pas avoir provoqué au préalable de réticulation du matériau.

Selon une caractéristique particulière de la présente invention, le procédé contient en outre une étape de réticulation du matériau polymère organique conducteur anionique. L'étape de réticulation est typiquement effectuée après substitution nucléophile et obtention du matériau polymère organique conducteur anionique, avantageusement après élimination du solvant.

Dans un mode de réalisation particulier de la présente invention, la réticulation du matériau polymère organique conducteur anionique est réalisée à l'aide d'au moins un agent de réticulation ajouté au préalable dans le mélange réactionnel du polymère A) et des amines B) et C), avantageusement après substitution nucléophile, ledit agent de réticulation ayant été préalablement dissous dans un solvant organique polaire.

Le solvant utilisé ici est de préférence le solvant ou l'un des solvants ayant servi à mettre en solution les composés A), B) et/ou C).

Avantageusement selon la présente invention, l'agent de réticulation est choisi dans le groupe constitué par les agents de réticulation thermique tels que l'acide triisocyanurique, les peroxydes organiques et les agents de réticulation à base de soufre susceptibles de former des ponts disulfure tels que les disulfures de sodium et les disulfures de tétraalkylthiourame; et les agents de photo-réticulation. La réticulation s'effectue alors, de préférence après évaporation du ou des solvant(s), par réaction des fonctions basiques de l'agent de réticulation avec les halogènes restants sur les chaînes du polymère de base. De manière générale, tout agent de réticulation utilisé dans la vulcanisation des polymères et des caoutchoucs peut être utilisé dans le cadre de la présente invention.

Dans un autre mode de réalisation particulier de la présente invention, la réticulation du matériau polymère organique conducteur anionique peut être réalisée après substitution nucléophile, sans ajout d'agent de réticulation, par réaction des fonctions azotées restantes non substituées de l'amine bifonctionnelle avec les halogènes restants sur les chaînes du polymère de base. Un excès stoechiométrique de fonctions halogénées réactives du polymère par rapport aux fonctions amines bifonctionnelles permet ainsi de favoriser la réticulation du matériau polymère organique conducteur anionique selon la présente invention.

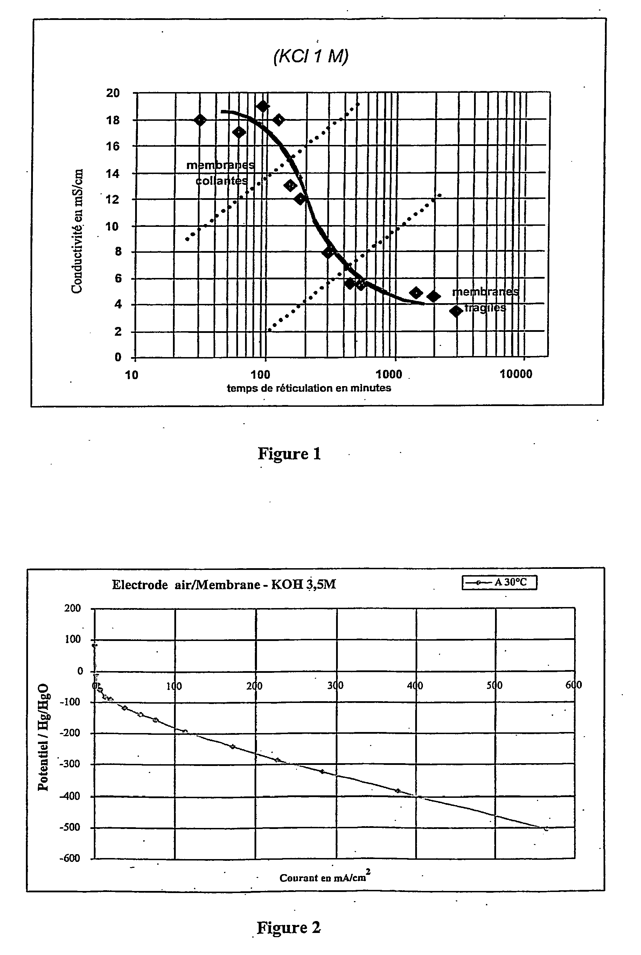

Avantageusement selon la présente invention, la réticulation du matériau est réalisée par voie thermique, de préférence suite à l'évaporation du solvant. En particulier, la réticulation du matériau est réalisée à une température de préférence comprise entre 60°C et 220°C, en particulier entre 100 et 150°C, pendant une durée comprise entre quelques dizaines de minutes et 5 heures, avantageusement entre 20 minutes et 3 heures, notamment entre 30 minutes et 2 heures, en particulier entre 1 et 2 heures, de préférence dans un four, sous atmosphère contrôlée ou non. Typiquement, la réticulation est réalisée durant 1 heure environ à la température de 150°C environ, sous atmosphère contrôlée ou non. Les choix d'une température et/ou d'une durée particulières de réticulation permettent d'influer sur le taux de réticulation du matériau ou de la membrane selon la présente invention, en fonction des caractéristiques recherchées. La figure 1 présente l'évolution de la conductivité en fonction du temps de réticulation à 150°C. Une réticulation longue permet de s'assurer d'une rigidité importante de la membrane ou du matériau au détriment de sa conductivité et de sa souplesse, alors qu'une réticulation de temps plus court conduit généralement à une meilleure conductivité et à une plus grande facilité d'utilisation, comme le montre la figure 1.

La réticulation du matériau polymère organique conducteur anionique selon la présente invention peut également être réalisée par toute autre méthode couramment utilisée.

Lorsque le matériau polymère organique conducteur anionique est sous forme solide ou lorsque le matériau est utilisé pour réaliser une membrane solide, il est possible de réticuler ledit matériau ou ladite membrane si on le désire, à l'aide d'un agent de réticulation contenant du soufre et susceptible de former des ponts disulfures, tel qu'un agent typique de la vulcanisation des caoutchoucs, du type disulfure de sodium ou disulfure de tétraalkylthiourame. Typiquement, la réticulation est réalisée par trempage du matériau dans une solution concentrée d'agent de réticulation tel que le disulfure de sodium dans l'eau, avantageusement à une température comprise entre 50°C et 80°C, de préférence pendant une durée comprise entre quelques dizaines de secondes et quelques minutes, typiquement entre 30 secondes et 5 minutes. Ce mode de réalisation est particulièrement mis en oeuvre lorsque aucun agent de réticulation n'a été ajouté au préalable, lors de la préparation du matériau polymère organique conducteur anionique.

Dans un mode de réalisation particulier de la présente invention, la réticulation du matériau est réalisée après évaporation du solvant pour réticuler le matériau sous forme solide, avantageusement pour la préparation de membranes. Dans un autre mode de réalisation, la réticulation du matériau est effectuée suite à la substitution nucléophile, mais préalablement à l'évaporation du solvant, lorsque le matériau est sous forme de solution, pour former un gel de polymère.

La présente invention a également pour objet un matériau polymère organique conducteur anionique, pour système électrochimique, susceptible d'être obtenu par la mise en oeuvre dudit procédé. Le matériau peut alors être sous forme de solution ou sous forme solide.

En particulier, le matériau polymère organique conducteur anionique selon la présente invention peut être sous forme solide, et peut alors être caractérisé par les propriétés suivantes :
- une conductivité ionique comprise entre 0,01 et 100 S/m à 25°C, en particulier entre 0,1 et 10 S/m,
- un nombre de transport anionique supérieur à 0,95, notamment pour les ions OH⁻ et Cl⁻,
- une capacité ionique supérieure à 0,5 éq/kg,
- une bonne stabilité thermique à une température comprise entre 25°C et 120°C, et
- une bonne stabilité chimique en milieu alcalin, ayant avantageusement une conductivité stable pendant 5 jours à température ambiante dans une solution de potasse.

La stabilité thermique du matériau est de préférence mesurée en statique. En dynamique, le matériau ne présente pas de perte de masse en analyse thermogravimétrique jusqu'à 250°C, autre que celle correspondant à l'évaporation de l'eau ou des solvants polaires présents dans le matériau, s'il en est.

La présente invention a également pour objet une membrane échangeuse d'anions contenant un matériau organique polymère conducteur anionique selon la présente invention et éventuellement un matériau support inerte. Le matériau support inerte peut être un tissu de verre ou de polymère ou une feuille non tissée. Avantageusement selon la présente invention, le matériau support inerte est un polymère non tissé, de préférence choisi dans le groupe constitué par le polypropylène, le polyéthylène, le polyamide et les polymères stables dans le milieu dans lequel fonctionnera le système électrochimique dans lequel sera mise en oeuvre la membrane. L'obtention de la membrane est réalisée par tout procédé classique de fabrication de membrane, tel que les méthodes de casting ou d'enduction en continu sur support inerte. Typiquement, l'épaisseur des membranes est de 0,02 à 0,2 mm.

La membrane selon la présente invention peut être autosupportée, auquel cas elle ne contient pas de matériau support inerte. Elle est dans ce cas typiquement obtenue par casting, en coulant une solution de matériau organique polymère conducteur anionique sur un support anti-adhésif tel que le téflon, puis en décollant le matériau du support afin d'obtenir la membrane.

La membrane selon la présente invention peut également contenir un matériau support inerte de type polypropylène, auquel cas ledit support fait alors partie intégrante de la membrane. Une telle membrane est avantageusement préparée par enduction en continu d'une solution de matériau organique polymère conducteur anionique sur ledit support inerte, puis par refroidissement et calandrage éventuel de la membrane.

La présente invention a également pour objet l'utilisation d'un matériau polymère organique conducteur anionique et/ou d'une membrane selon la présente invention pour réaliser des assemblages électrodes-membranes ou électrodes-membranes-électrodes dans des systèmes électrochimiques, tels que les piles à combustible, notamment les piles à combustible à membrane alcaline (AMFC).

La présente invention a également pour objet l'utilisation d'un matériau polymère organique conducteur anionique selon la présente invention comme colle anionique pour améliorer les contacts entre membranes et électrodes dans des systèmes électrochimiques, tels que les piles à combustible. Dans ce cas, les membranes utilisées peuvent être des membranes autres que celles préparées selon le procédé de la présente invention.

Dans ces deux modes de réalisation de l'invention, lorsque le matériau est utilisé pour réaliser des assemblages électrodes-membranes ou électrodes-membranes-électrodes ou comme colle anionique pour améliorer les contacts entre membranes et électrodes dans des systèmes électrochimiques, le matériau est avantageusement sous forme solide, moyennement ou peu réticulé, et possède de préférence des propriétés d'adhésion élevées.

Avantageusement, lorsque le matériau ou la membrane selon la présente invention sont utilisés dans des piles à combustible, les contre ions halogénés des groupes ammonium quaternaire du matériau sont échangés contre des ions OH⁻. L'échange des ions halogénés, tels que les ions chlorures, par des ions hydroxyles peut être effectué par trempage du matériau sous forme solide ou de la membrane dans une solution de KOH 1M, pendant au moins 2 jours à température ambiante, de manière à assurer une conductivité optimale en ions OH⁻. L'échange d'ions peut également être effectué par une opération d'électrodialyse.

La présente invention a également pour objet l'utilisation d'un matériau polymère organique conducteur anionique selon la présente invention comme additif pour la fabrication de couches actives d'électrodes. Le matériau est alors avantageusement sous forme de solution non réticulée. L'additif est ensuite généralement réticulé à chaud, après mise en oeuvre dans l'électrode.

Typiquement, une électrode qui a pour rôle d'assurer le triple contact électron, gaz, solide est composée d'une couche de diffusion et d'une couche active. A titre d'exemple, le matériau selon la présente invention peut être utilisé pour fabriquer une couche active d'électrode à air, dont la composition peut être la suivante :
65% de charbon platiné,
10% de PTFE (téflon), et
25% du matériau polymère conducteur anionique sous forme de solution,
le matériau étant ensuite réticulé thermiquement après sa mise en oeuvre dans ladite électrode.

Enfin, la présente invention a pour objet l'utilisation d'un matériau polymère organique conducteur anionique et/ou d'une membrane selon la présente invention dans des systèmes électrochimiques tels que des piles à combustible, avantageusement du type hydrogène-air ou méthanol-air, ou des générateurs électrochimiques du type réducteur en solution-air tels que les générateurs métal-air, en particulier zinc-air et aluminium-air. Typiquement, une membrane échangeuse d'anions selon la présente invention, ainsi que des électrodes, sont insérés dans un système électrochimique, du type pile à combustible hydrogène-air. La membrane est réalisée avantageusement selon le procédé de la présente invention, en faisant en sorte qu'elle ait des propriétés interfaciales améliorées. Une telle pile à combustible hydrogène-air, alimentée en air non décarbonaté et en hydrogène, présente ainsi des performances électrochimiques intéressantes d'un point de vue industriel, et possède avantageusement une puissance surfacique supérieure à 40 mW/cm² à 25°C.

Les exemples suivants sont donnés à titre non limitatif et illustrent la présente invention.

### Exemples de réalisation de l'invention :

### Exemple 1 : préparation d'une membrane

Une membrane conforme à la présente invention est réalisée comme suit :
On fait tout d'abord réagir par substitution nucléophile 30g de polyépichlorhydrine (0,324 mole.unité), de masse molaire de 700 000 environ en poids, et 5,5g de quinuclidine (0,05 mole) en solution dans 500mL de DMF sec, maintenu sous argon et sous agitation, à 125°C pendant 7 heures. L'évolution de la réaction est suivie par conductimétrie à température ordinaire sur des prélèvements de solution. La conductivité de la solution n'évolue pratiquement plus après 6 heures de réaction. Un examen d'un échantillon de la solution en RMN ¹³C révèle que la quinuclidine a presque totalement réagi. La solution est ensuite refroidie à 80°C, et on y ajoute 1, 81g de DABCO (0,016 mole). La solution est maintenue à cette température pendant 22 heures. A 80°C, un seul atome d'azote du DABCO réagit, et il ne se produit pratiquement pas de réticulation. Au cours de cette opération, la conductivité de la solution augmente légèrement. Un échantillon de solution finale est examiné par RMN ¹³C, qui détecte bien du DABCO greffé et du DABCO libre résiduel.

### Conductimétrie :

| | |
|---|---|
| t = 0 conductivité inférieure à | 20 micro Siemens par centimètre |
| 1 heure | 540 |
| 2 heures | 640 |
| 4 heures | 675 |
| 6 heures | 700 |
| 7 heures | 705 addition du DABCO |
| 8 heures | 825 |
| 9 heures | 840 |
| 10 heures | 845 |

### RMN¹³C :

| Polyépichlorhydrine : | | |
|---|---|---|
| carbone | déplacement chimique (ppm) | multiplicité |
| CH | 78,1 | 2 |
| CH2O | 68,8 | 2 |
| CH2Cl | 44,2 | s |

| Quinuclidine : | | |
|---|---|---|
| carbone | déplacement chimique (ppm) | multiplicité |
| CH | 24 | s |
| CH2 | 26,3 | s |
| CH2N | 47,2 | s |

| DMF : | | |
|---|---|---|
| carbone | déplacement chimique (ppm) | multiplicité |
| CH | 162,2 | s |
| CH3 | 35,7 | s |
| CH3 | 30,6 | s |
| DABCO: | | |
| carbone | déplacement chimique (ppm) | multiplicité |
| CH2 | 45,6 | s |

### Polymère en solution traité par quinuclidine et DABCO :

| Squelette polymère : | déplacement chimique | multiplicité |
|---|---|---|
| CH-CH2-N⁺ | 71,8 | s large |
| O-CH2-CH | 65,5 | s large |
| CH-CH2-N⁺ | 54,6 | s |
| Groupe ammonium greffé : | | |
| Quinuclidinium | déplacement chimique | multiplicité |
| CH2-N⁺ | 45,3 | s |
| CH2-CH | 23,4 | s |
| CH2-CH | 19,2 | s |
| DABCO greffé | déplacement chimique | multiplicité |
| CH2-N⁺ | 52,5 | s |
| CH2- CH2-N⁺ | 44,8 | s |

La solution préparée obtenue a généralement une coloration rosée translucide, lorsque le DMF et la poly-épichlorhydrine sont purs.

Cette solution est alors utilisée pour couler une membrane par casting sur un support de type non-tissé de polypropylène posé sur une plaque plane de téflon. L'ensemble est alors mis sous hotte à évaporer ou sous cloche à chaud afin de terminer la réaction des amines tertiaires et évapore ensuite le solvant utilisé lors de la préparation de la solution. La membrane ainsi obtenue est réticulée par chauffage à 150°C pendant 2 heures Elle est laissée à refroidir, puis elle est soit décollée directement de son support, soit humidifiée à l'eau permutée pour se décoller d'elle-même de la plaque support en téflon utilisée.

### Exemple 2 : Propriétés de la membrane

La membrane préparée ci-dessus présente les propriétés suivantes :

### Conductivité :

Les tests de conductivité réalisés sur une telle membrane donnent les résultats reportés dans le tableau 1 ci-dessous. Deux types de conductivité ont été mesurés à température ambiante, une conductivité par les ions chlorures, état natif de la membrane, et une conductivité par les ions hydroxyles après échange ionique de la membrane en milieu alcalin fort *(potasse 1 M ou 3,5M).*

**Tableau 1 :**

| imprégnée | Conductivité (S/cm) |
|---|---|
| KC11M | 8-9 10⁻³ |
| KOH 1M | 6-8 10⁻² |

### Stabilité :

L'échange des ions de la membrane est effectué dans de la potasse 1 M, et l'on mesure l'évolution de la conductivité de la membrane en fonction du temps. En une heure environ, sa conductivité a atteint un palier de conductivité qui se situe à 0,019 S/cm² à la température ambiante, valeur qui n'évolue plus après plus de cinq jours dans cette solution et la mesure en continu de sa conductivité.

La même expérience est réalisée sur une membrane échangée dans la potasse 7 M. Sa conductivité a atteint un palier de conductivité qui se situe à 0,052 S/cm² à la température ambiante, valeur qui n'évolue pas sur une période d'une dizaine d'heures dans cette solution et la mesure en continu de sa conductivité.

La membrane est stable en milieu basique.

### Performances électrochimiques en température :

Dans un montage non-optimisé, une membrane préparée, réticulée et échangée de la même manière que dans les deux paragraphes précédents *(KOH* 3,5 *M)* est utilisée pour constituer une demi-pile comportant une électrode à air en contact avec ladite membrane sur une de ses faces, l'autre face étant en contact avec une solution 3,5 fois molaire de potasse à la température ambiante. Les potentiels sont mesurés par rapport à une électrode de référence Hg.HgO dans de la potasse 1 M, à travers un pont capillaire jusqu'à la membrane. Une courbe de polarisation est effectuée à température ambiante (aux environs de 30°C), et les valeurs obtenues sont reportées dans la figure 2.

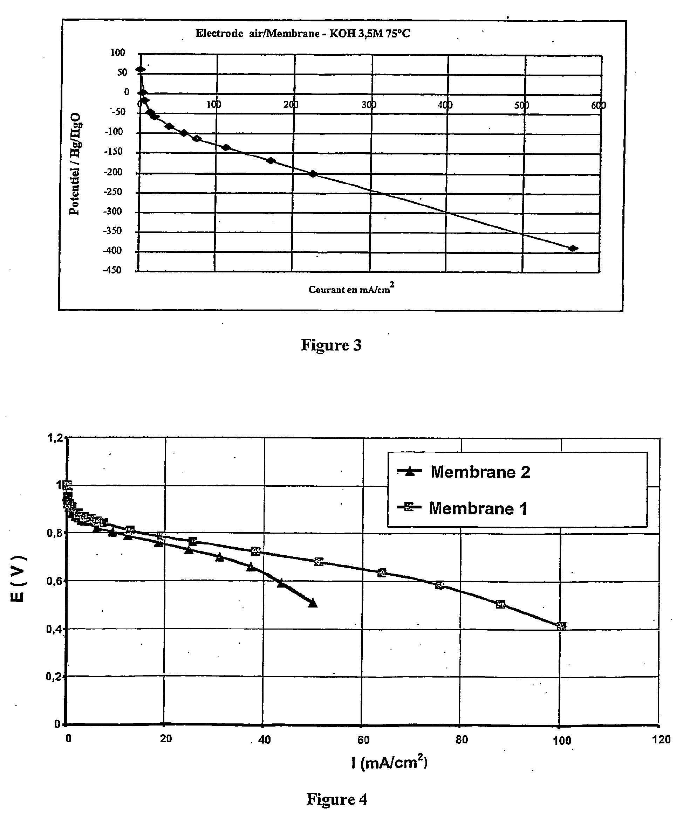

Le montage non-optimisé précédent est ensuite utilisé pour effectuer une nouvelle courbe de polarisation à la température de 75°C, toujours dans de la potasse 3,5 M. Les valeurs de courant et de tension relevées sont représentées sur la figure 3.

Il apparaît qu'à plus forte température, la polarisation de l'assemblage électrode à air/membrane diminue, sans dégradation apparente de cette membrane. Ce résultat montre que l'assemblage pourrait être utilisé à une température allant jusqu'à 80°C (température de fonctionnement actuel des PEMFC).

### Essais en cellules électrochimiques

Les membranes préparées selon l'exemple 1 peuvent être utilisées dans une cellule de pile à combustible pour améliorer les propriétés interfaciales électrode-membrane (Membrane préparée à partir de poly épichlorhydrine, et d'une association de DABCO et de quinuclidine dans un rapport molaire de 0,3 environ, membrane dénommée ici « Membrane 1 »). De telles membranes sont montées dans un assemblage, et testées dans une cellule de test (sous H₂ et air, à température ambiante). Les performances sont comparées avec une membrane classique (polymère et uniquement DABCO comme amine tertiaire, membrane dénommée ici « Membrane 2 ») sans solution interfaciale.

La figure 4 présente l'évolution de la tension en fonction de la densité de courant de ces deux types de membranes.

La figure 5 présente l'évolution de la densité de puissance en fonction de la densité de courant de ces deux types de membranes.

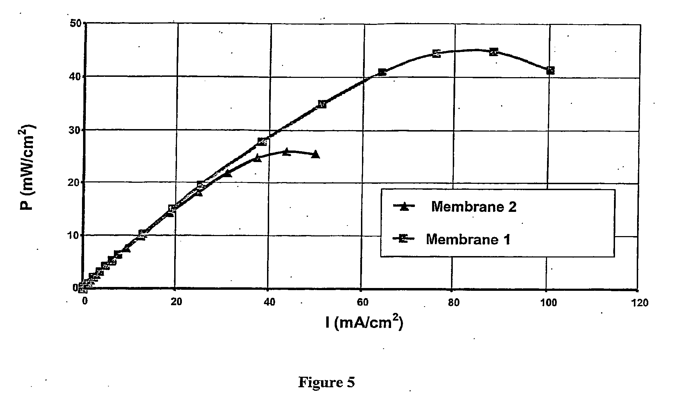

Les figures 4 et 5 mettent en évidence l'intérêt de la membrane contenant un mélange d'amines monofonctionnelle et bifonctionnelle du fait de ses très bonnes propriété d'adhésion, et l'amélioration des performances électrochimiques sous air par amélioration de l'interface d'une telle membrane (densités de puissance : 45 mW/cm² à 80 mA/cm² pour une tension de 0,6 V).

## Revendications

1. Procédé de préparation d'un matériau polymère organique conducteur anionique, pour système électrochimique, par une réaction de substitution nucléophile de :
A) au moins un polymère organique contenant des groupes fonctionnels halogénés réactifs avec
B) au moins une amine bifonctionnelle tertiaire et
C) au moins une amine monofonctionnelle tertiaire ou secondaire,
lesdits composés A), B) et C) étant en solution dans au moins un solvant organique polaire,
avantageusement à une température comprise entre 20°C et 150°C, pour conduire à la formation d'un matériau polymère organique conducteur anionique, porteur de groupes ammonium quaternaire, sous forme de solution,
lesdites amines monofonctionnelles ou bifonctionnelles étant choisies de sorte à ce que les ammoniums quaternaires formés soient peu ou pas sensibles à la β-élimination de protons, lesdites amines monofonctionnelles ou bifonctionnelles étant avantageusement choisies dans le groupe constitué par les amines ne possédant pas d'atome d'hydrogène en β de l'azote; les amines dont les atomes d'hydrogène en β de l'azote ont un caractère peu acide, telles que les amines aromatiques, les amines dont les atomes d'hydrogène en β de l'azote sont stériquement encombrés, en particulier les amines cyclisées, les amines possédant au moins un atome de carbone en β de l'azote porteur d'au moins un groupe donneur inductif tel que le groupe OH ou N; et leurs mélanges.

2. Procédé selon la revendication 1, **caractérisé en ce qu'**il comprend les étapes suivantes :
a₁) dissolution dans au moins un solvant organique polaire des composés B) et C),
b₁) dissolution du composé A) dans ledit solvant organique polaire ou dans un solvant organique miscible avec ledit solvant organique polaire,
c₁) réaction de substitution nucléophile par mélange des solutions ainsi obtenues, avantageusement à une température comprise entre 20°C et 150°C, encore plus avantageusement entre 60 et 100°C, et
d₁) récupération de la solution du matériau polymère organique conducteur anionique.

3. Procédé selon la revendication 1, **caractérisé en ce qu'**il comprend les étapes suivantes :
a₂) réaction de substitution nucléophile du composé A) avec le composé C), avantageusement à une température T₁ comprise entre 20°C et 150°C, encore plus avantageusement entre 110 et 130°C, lesdits composés A) et C) ayant été préalablement dissous dans au moins un solvant organique polaire,
b₂) ajout dans le mélange réactionnel du composé B),
e₂) réaction de substitution nucléophile dudit composé B) avec les composés obtenus à l'issue de l'étape a₂), avantageusement à une température T₂ comprise entre 20°C et 150°C, encore plus avantageusement entre 60 et 100°C, puis
d₂) récupération de la solution du matériau polymère organique conducteur anionique.

4. Procédé selon l'une quelconque des revendications 1 à 3, **caractérisé en ce que** le polymère organique contenant des groupes fonctionnels halogénés réactifs est un homopolymère ou un copolymère à squelette polyéther.

5. Procédé selon l'une quelconque des revendications 1 à 4, **caractérisé en ce que** le polymère organique est un polymère d'épichlorhydrine ou un copolymère à base d'épichlorhydrine et de comonomère tel que l'oxyde d'éthylène.

6. Procédé selon l'une quelconque des revendications précédentes, **caractérisé en ce que** l'amine monofonctionnelle tertiaire ou secondaire est choisie dans le groupe constitué par la diéthanolamine, la triéthanolamine, la quinuclidine, le quinuclidinol, et leurs mélanges.

7. Procédé selon l'une quelconque des revendications précédentes, **caractérisé en ce que** l'amine bifonctionnelle est choisie dans le groupe constitué par la tétraméthyléthylène diamine, le 1,4-diazobicyclo-(2,2,2)-octane (DABCO), la N-méthyl imidazoline, la bipyridine, la diimidazoline, et leurs mélanges.

8. Procédé selon l'une quelconque des revendications précédentes, **caractérisé en ce que** les proportions molaires de fonctions amine par rapport aux fonctions halogène sont comprises entre 0,1 et 1.

9. Procédé selon l'une quelconque des revendications précédentes, **caractérisé en ce que** les proportions molaires de l'amine bifonctionnelle par rapport à l'amine monofonctionnelle sont comprises entre 0,1 et 0,9.

10. Procédé selon l'une quelconque des revendications précédentes, **caractérisé en ce que** la réaction de substitution nucléophile de A) avec B) et C) est effectuée à une température comprise entre 25°C et 130 °C, avantageusement entre 25°C et 100 °C, encore plus avantageusement entre 50°C et 100°C.

11. Procédé selon l'une quelconque des revendications précédentes, **caractérisé en ce qu'**il contient en outre une étape d'élimination du solvant pour obtenir un matériau polymère conducteur anionique sous forme solide.

12. Procédé selon la revendication 11, **caractérisé en ce que** l'élimination du solvant est réalisée par évaporation de solvant ou par précipitation du matériau par inversion de phase à l'aide d'un solvant non miscible avec ledit solvant

13. Procédé selon l'une quelconque des revendications précédentes, **caractérisé en ce qu'**il contient en outre une étape de réticulation du matériau polymère organique conducteur anionique, avantageusement à l'aide d'au moins un agent de réticulation ajouté au préalable dans le mélange réactionnel du polymère et des amines, avantageusement après substitution nucléophile, ledit agent de réticulation ayant été préalablement dissous dans un solvant organique polaire.

14. Procédé selon la revendication 13, **caractérisé en ce que** la réticulation du matériau est réalisée à une température comprise entre 60°C et 220 °C, pendant une durée comprise entre quelques dizaines de minutes et 5 heures.

15. Matériau polymère organique conducteur anionique, pour système électrochimique, susceptible d'être obtenu par la mise en oeuvre du procédé selon l'une quelconque des revendications 1 à 14.

16. Matériau polymère organique conducteur anionique selon la revendication 15, sous forme solide, **caractérisé par** :
- une conductivité ionique comprise entre 0,01 et 100 S/m à 25°C, en particulier entre 0,1 et 10 S/m,
- un nombre de transport anionique supérieur à 0,95, notamment pour les ions OH⁻ et Cl⁻,
- une capacité ionique supérieure à 0,5 éq/kg,
- une bonne stabilité thermique à une température comprise entre 25°C et 120°C, et
- une bonne stabilité chimique en milieu alcalin, ayant avantageusement une conductivité stable pendant 5 jours à température ambiante dans une solution de potasse.

17. Membrane échangeuse d'anions contenant un matériau organique polymère conducteur anionique tel que défini à la revendication 15 ou 16, et éventuellement un matériau support inerte.

18. Utilisation d'un matériau polymère organique conducteur anionique tel que défini à la revendication 15 ou 16 et/ou d'une membrane telle que définie à la revendication 17 pour réaliser des assemblages électrodes-membranes ou électrodes-membranes-électrodes dans des systèmes électrochimiques, tels que les piles à combustible.

19. Utilisation d'un matériau polymère organique conducteur anionique tel que défini à la revendication 15 ou 16 comme colle anionique pour améliorer les contacts entre membranes et électrodes dans des systèmes électrochimiques, tels que les piles à combustible.

20. Utilisation d'un matériau polymère organique conducteur anionique tel que défini à la revendication 15 comme additif pour la fabrication de couches actives d'électrodes.

21. Utilisation d'un matériau polymère organique conducteur anionique tel que défini à la revendication 15 ou 16 et/ou d'une membrane telle que définie à la revendication 17 dans des systèmes électrochimiques tels que des piles à combustible, avantageusement du type hydrogène-air ou méthanol-air, ou des générateurs électrochimiques du type réducteur en solution-air.

## Claims

1. A method for preparing an anionic conductive organic polymer material for an electrochemical system, by a nucleophilic substitution reaction of:
A) at least one organic polymer containing reactive halogenated functional groups with
B) at least one tertiary bifunctional amine, and
C) at least one tertiary or secondary monofunctional amine,
said compounds A), B),and C) being in solution in at least one polar organic solvent,
advantageously at a temperature comprised between 20°C and 150°C, in order to lead to the formation of an anionic conductive organic polymer material bearing quaternary ammonium groups, as a solution,
said monofunctional or bifunctional amines being selected so that the formed quaternary ammoniums are little or not sensitive to β-removal of protons, said mono-functional or bi-functional amines being advantageously selected from the group formed by amines not having a β hydrogen atom on the nitrogen atom; the amines for which the β hydrogen atoms on the nitrogen atom do not have a very acid character, such as aromatic amines, amines for which the β hydrogen atoms on the nitrogen atom are sterically hindered, in particular cyclized amines, amines having at least one β carbon atom on the nitrogen atom bearing at least one inductive donor group such as the OH group or N; and mixtures thereof.

2. The method according to claim 1, **characterized in that it comprises the following steps:**
a₁) dissolution of compounds B) and C) in at least one polar organic solvent,
b₁) dissolution of compound A) in said polar organic solvent or in an organic solvent miscible with said polar organic solvent,
c₁) nucleophilic substitution reaction by mixing the thereby obtained solutions, advantageously at a temperature comprised between 20°C and 150°C, even more advantageously between 60 and 100°C, and
d₁) recovery of the solution of the anionic conducting organic polymer material.

3. The method according to claim 1, **characterized in that** it comprises the following steps: a₂) a nucleophilic substitution reaction of compound A) with compound C), advantageously at a temperature T₁ comprised between 20°C and 150°C, even more advantageously between 110 and 130°C, said compounds A) and C) having been dissolved beforehand in at least one polar organic solvent,
b₂) adding the compound B) into the reaction mixture,
c₂) a nucleophilic substitution reaction of said compound B) with compounds obtained upon completion of step a₂), advantageously at a temperature T₂ comprised between 20°C and 150°C, even more advantageously between 60 and 100°C, and then
d₂) recovery of the solution of the anionic conducting organic polymer material.

4. The method according to any of claims 1 to 3, **characterized in that** the organic polymer containing reactive halogenated functional groups is a homopolymer or a copolymer with a polyether backbone.

5. The method according of claims 1 to 4, **characterized in that** the organic polymer is an epichlorhydrin polymer or a copolymer based on epichlorhydrin and a co-monomer such as ethylene oxide.

6. The method according to any of the preceding claims, **characterized in that** the tertiary or secondary mono-functional amine is selected from the group formed by diethanolamine, triethanolamine, quinuclidine, quinuclidinol, and mixtures thereof.

7. The method according to any of the preceding claims, **characterized in that** the bifunctional amine is selected from the group formed by tetramethylethylene diamine, 1,4-diazobicyclo-(2,2,2)-octane (DABCO), N-methyl imidazoline, bipyridine, diimidazoline, and mixtures thereof.

8. The method according to any of the preceding claims, **characterized in that** the molar proportions of amine functions relative to the halogen functions are comprised between 0.1 and 1.

9. The method according to any of the preceding claims, **characterized in that** the molar proportions of the bifunctional amine relative to the mono-functional amine are comprised between 0.1 and 0.9.

10. The method according to any of the preceding claims, **characterized in that** the nucleophilic substitution reaction of A) with B) and C) is carried out at a temperature comprised between 25°C and 130°C, advantageously between 25°C and 100°C, even more advantageously between 50°C and 100°C.

11. The method according to any of the preceding claims, **characterized in that** it further contains a step for removing the solvent in order to obtain an anionic conductive polymer material as a solid.

12. The method according to claim 11, **characterized in that** removal of the solvent is achieved by solvent evaporation or by precipitation of the material by phase inversion with a solvent non-miscible with said solvent.

13. The method according to any of the preceding claims, **characterized in that** it further contains a step for crosslinking the anionic conductive organic polymer material, advantageously with at least one crosslinking agent added beforehand into the reaction mixture of the polymer and the amines, advantageously after nucleophilic substitution, said crosslinking agent having been dissolved beforehand in a polar organic solvent.

14. The method according to claim 13, **characterized in that** crosslinking of the material is carried out at a temperature comprised between 60°C and 220°C, for a duration comprised between a few tens of minutes and 5 hours.

15. An anionic conductive organic polymer material for an electrochemical system, capable of being obtained by applying the method according to any of claims 1 to 14.

16. The anionic conductive organic polymer material according to claim 15, as a solid, **characterized by**:
- an ionic conductivity comprised between 0.01 and 100 S/m at 25°C in particular between 0.1 and 10 S/m,
- an anionic transport number larger than 0.95, notably for OH⁻ and Cl⁻ ions,
- an ionic capacity larger than 0.5 eq./kg,
- good thermal stability at a temperature comprised between 25°C and 120°C, and
- good chemical stability in an alkaline medium, advantageously with stable conductivity for 5 days at room temperature in a potash solution.

17. An anion exchanger membrane containing an anionic conductive polymer organic material as defined in claim 15 or 16, and optionally an inert supporting material.

18. The use of an anionic conductive organic polymer material as defined in claim 15 or 16 and/or of a membrane as defined in claim 17 for making electrodes-membranes or electrodes-membranes-electrodes assemblies in electrochemical systems, such as fuel cells.

19. The use of an anionic conductive organic polymer material as defined in claim 15 or 16, as an anionic adhesive for improving contact between membranes and electrodes in electrochemical systems, such as fuel cells.

20. The use of an anionic conductive organic polymer material as defined in claim 15 as an additive for making active layers of electrodes.

21. The use of an anionic conductive organic polymer material as defined in claim 15 or 16 and/or of a membrane as defined in claim 17 in electrochemical systems such as fuel cells, advantageously of the hydrogen-air or methanol-air type, or electrochemical generators of the reducing-agent-in-solution/air type.

## Patentansprüche

1. Verfahren zur Herstellung eines anionenleitfähigen organischen Polymermaterials für ein elektrochemisches System durch eine nukleophilen Substitutionsreaktion von:
A) mindestens einem organischen Polymer, das halogenierte funktionelle Gruppen enthält, die reagieren mit
B) mindestens einem tertiären bifunktionellen Amin und
C) mindestens einem tertiären oder sekundären monofunktionellen Amin,
wobei die Verbindungen A), B) und C) in mindestens einem polaren organischen Lösungsmittel gelöst sind,
vorzugsweise bei einer Temperatur zwischen 20 °C und 150 °C inklusive, um zur Bildung eines anionenleitfähigen organischen Polymermaterials zu führen, das quaternäre Ammoniumgruppen in gelöster Form trägt,
wobei die monofunktionellen oder bifunktionellen Amine derart ausgewählt sind, dass die gebildeten quarternären Ammoniomgruppen auf die β-Eliminierung von Protonen wenig oder nicht sensibel reagieren, wobei die monofunktionellen oder bifunktionellen Amine in vorteilhafter Weise aus der Gruppe ausgewählt sind, die von den Aminen gebildet werden, die kein Wasserstoffatom in β zu Stickstoff besitzen; den Aminen, deren Wasserstoffatome in β zu Stickstoff einen wenig sauren Charakter haben, wie die aromatischen Amine, den Aminen, deren Wasserstoffatome in β zu Stickstoff sterisch gehindert sind, insbesondere die zyklisierten Amine, den Aminen, die mindestens ein Kohlenstoffatom in β zu Stickstoff besitzen als Träger mindestens einer induktiven Donorgruppe wie die OH- oder N-Gruppe, und ihren Gemischen.

2. Verfahren nach Anspruch 1, **dadurch gekennzeichnet, dass** es die folgenden Schritte umfasst:
a₁) Lösen der Verbindungen B) und C) in mindestens einem polaren organischen Lösungsmittel,
b₁) Lösen der Verbindung A) in dem polaren organischen Lösungsmittel oder in einem organischen Lösungsmittel, das mit dem polaren organischen Lösungsmittel mischbar ist,
c₁) nukleophile Substitutionsreaktion durch Mischen der auf diese Weise hergestellten Lösungen, in vorteilhafter Weise bei einer Temperatur zwischen 20 °C und 150 °C inklusive, und in noch vorteilhafterer Weise zwischen 60 und 100 °C, und
d₁) Rückgewinnung der Lösung des anionenleitfähigen organischen Polymermaterials.

3. Verfahren nach Anspruch 1, **dadurch gekennzeichnet, dass** es die folgenden Schritte umfasst:
a₂) nukleophile Substitutionsreaktion der Verbindung A) mit der Verbindung C), in vorteilhafter Weise bei einer Temperatur T₁ zwischen 20 °C und 150 °C inklusive, in noch vorteilhafterer Weise zwischen 110 und 130 °C, wobei die Verbindungen A) und C) zuvor in mindestens einem polaren organischen Lösungsmittel gelöst wurden,
b₂) Hinzufügen der Verbindung B) in das Reaktionsgemisch,
c₁) nukleophile Substitutionsreaktion der Verbindung B) mit den Verbindungen, die nach Schritt a₂) entstanden sind, in vorteilhafter Weise bei einer Temperatur T₂ zwischen 20 °C und 150 °C inklusive, in noch vorteilhafterer Weise zwischen 60 und 100 °C, und
d₁) Rückgewinnung der Lösung des anionenleitfähigen organischen Polymermaterials.

4. Verfahren nach einem der Ansprüche 1 bis 3, **dadurch gekennzeichnet, dass** das organische Polymer, das die reaktiven halogenierten funktionellen Gruppen enthält, ein Homopolymer oder ein Copolymer mit Polyetherskelett ist.

5. Verfahren nach einem der Ansprüche 1 bis 4, **dadurch gekennzeichnet, dass** das organische Polymer ein Epichlorhydrinpolymer oder ein Copolymer auf der Basis von Epichlorhydrin und Comonomer wie das Ethylenoxid ist.

6. Verfahren nach einem der vorangehenden Ansprüche, **dadurch gekennzeichnet, dass** das sekundäre oder tertiäre monofunktionelle Amin aus der Gruppe ausgewählt ist, die von dem Diethanolamin, dem Triethanolamin, dem Chinuclidin, dem Chinuclidinol und ihren Gemischen gebildet wird.

7. Verfahren nach einem der vorangehenden Ansprüche, **dadurch gekennzeichnet, dass** bifunktionelle Amin aus der Gruppe ausgewählt ist, die von dem Tetramethylethylendiamin, dem 1,4-Diazobicyclo-(2,2,2)-octan (DABCO), dem N-Methylimidazolin, dem Bipyridin, dem Diimidazolin und ihren Gemischen gebildet wird.

8. Verfahren nach einem der vorangehenden Ansprüche, **dadurch gekennzeichnet, dass** die molaren Proportionen von Aminfunktionen im Verhältnis zu Halogenfunktionen zwischen 0,1 und 1 inklusive betragen.

9. Verfahren nach einem der vorangehenden Ansprüche, **dadurch gekennzeichnet, dass** die molaren Proportionen des bifunktionellen Amins im Verhältnis zum monofunktionellen Amin zwischen 0,1 und 0,9 inklusive betragen.

10. Verfahren nach einem der vorangehenden Ansprüche, **dadurch gekennzeichnet, dass** die nukleophile Substitutionsreaktion von A) mit B) und C) bei einer Temperatur zwischen 25 °C und 130 °C inklusive durchgeführt wird, in vorteilhafter Weise zwischen 25 °C und 100 °C, und in noch vorteilhafterer Weise zwischen 50 °C und 100 °C.

11. Verfahren nach einem der vorangehenden Ansprüche, **dadurch gekennzeichnet, dass** es weiterhin einen Schritt zur Eliminierung des Lösungsmittels enthält, um ein anionenleitfähiges Polymermaterial in fester Form zu erhalten.

12. Verfahren nach Anspruch 11, **dadurch gekennzeichnet, dass** die Eliminierung des Lösungsmittels durch Lösungsmittelverdampfung oder durch Ausfällen des Materials durch Phasenumkehr mit Hilfe eines Lösungsmittels durchgeführt wird, das mit dem Lösungsmittel nicht mischbar ist.

13. Verfahren nach einem der vorangehenden Ansprüche, **dadurch gekennzeichnet, dass** es weiterhin einen Vernetzungsschritt des anionenleitfähigen organischen Polymermaterials enthält, in vorteilhafter Weise mit Hilfe von mindestens einem Vernetzungsstoff, der dem Reaktionsgemisch des Polymers und der Amine zuvor hinzugegeben wird, in vorteilhafter Weise nach nukleophiler Substitution, wobei der Vernetzungsstoff zuvor in einem polaren organischen Lösungsmittel gelöst wurde.

14. Verfahren nach Anspruch 13, **dadurch gekennzeichnet, dass** die Vernetzung des Materials bei einer Temperatur zwischen 60 °C und 220 °C inklusive während einer Dauer zwischen einigen Dutzend Minuten und 5 Stunden inklusive durchgeführt wird.

15. Anionenleitfähiges organisches Polymermaterial für ein elektrochemisches System, das durch die Umsetzung des Verfahrens nach einem der Ansprüche 1 bis 14 herstellbar ist.

16. Anionenleitfähiges organisches Polymermaterial nach Anspruch 15 in fester Form, **gekennzeichnet durch**:
- eine Ionenleitfähigkeit zwischen 0,01 und 100 S/m inklusive bei 25 °C, insbesondere zwischen 0,1 und 10 S/m,
- eine Anionentransportanzahl über 0,95, vor allem für die OH⁻- und Cl⁻-Ionen
- eine Ionenkapazität über 0,5 Äq./kg,
- eine gute thermische Stabilität bei einer Temperatur zwischen 25 °C und 120 °C inklusive, und
- eine gute chemische Stabilität in alkalischem Milieu mit einer in vorteilhafter Weise stabilen Leitfähigkeit für fünf Tage bei Raumtemperatur in einer Kalilösung.

17. Membran zum Austausch von Anionen, die ein anionenleitfähiges organisches Polymermaterial enthält, so wie in Anspruch 15 oder 16 definiert, und eventuell einen inerten Trägerstoff.

18. Verwendung eines anionenleitfähigen organischen Polymermaterials wie in Anspruch 15 oder 16 definiert und/oder einer Membran, wie in Anspruch 17 definiert zur Herstellung von Elektroden-Membranen- oder Elektroden-Membranen-Elektroden-Verbindungen in elektrochemischen Systemen wie Brennstoffzellen.

19. Verwendung eines anionenleitfähigen organischen Polymermaterials wie in Anspruch 15 oder 16 definiert als anionischer Kleber zur Verbesserung der Kontakte zwischen Membranen und Elektroden in elektrochemischen Systemen wie Brennstoffzellen.

20. Verwendung eines anionenleitfähigen organischen Polymermaterials wie in Anspruch 15 definiert als Zusatz zur Herstellung von aktiven Elektrodenschichten.

21. Verwendung eines anionenleitfähigen organischen Polymermaterials wie in Anspruch 15 oder 16 definiert und/oder einer Membran wie in Anspruch 17 definiert in elektrochemischen Systemen wie Brennstoffzellen, in vorteilhafter Weise der Bauart Wasserstoff-Luft oder Methanol-Luft, oder von elektrochemischen Generatoren der Bauart Reduktor in Lösung-Luft.
